(19) Europäisches Patentamt
European Patent Office
Office européen des brevets

(11) **EP 1 126 080 B1**

(12) **EUROPÄISCHE PATENTSCHRIFT**

(45) Veröffentlichungstag und Bekanntmachung des Hinweises auf die Patenterteilung:
**09.03.2005 Patentblatt 2005/10**

(51) Int Cl.[7]: **D21G 1/00**, D21G 1/02

(21) Anmeldenummer: **01101774.6**

(22) Anmeldetag: **26.01.2001**

(54) **Verfahren zum Betreiben einer Kalanderwalze und Kalanderwalze**

Method for operating a calender roll, and a calender roll

Procédé de fonctionnement d'un rouleau de calandre, et rouleau de calandre

(84) Benannte Vertragsstaaten:
**DE FI FR GB SE**

(30) Priorität: **12.02.2000 DE 10006299**

(43) Veröffentlichungstag der Anmeldung:
**22.08.2001 Patentblatt 2001/34**

(73) Patentinhaber: **Voith Paper Patent GmbH**
**89522 Heidenheim (DE)**

(72) Erfinder: **van Haag, Rolf, Dr.-Ing.**
**47647 Kerken (DE)**

(74) Vertreter: **Knoblauch, Andreas, Dr.-Ing. et al**
**Schlosserstrasse 23**
**60322 Frankfurt (DE)**

(56) Entgegenhaltungen:
**EP-A- 0 779 394         DE-A- 3 638 070**
**DE-A- 4 030 190**

**Beschreibung**

Die Erfindung betrifft ein Verfahren zum Betreiben einer Kalanderwalze, die rotierend mit mindestens einer weiteren Kalanderwalze eines Walzenstapels zusammenwirkt und einen Walzenmantel aufweist, wobei mindestens eine Kalanderwalze des Walzenstapels einen elastischen Belag aufweist. Ferner betrifft die Erfindung eine Kalanderwalze mit einem Walzenmantel und einer mit einem vom Walzenmantel umschlossenen Innenraum verbundenen Versorgungsanschlußanordnung, wobei die Kalanderwalze mit mindestens einer weiteren Kalanderwalze eines Walzenstapels, der mindestens eine Kalanderwalze mit einem elastischen Belag aufweist, zusammenwirkend betreibbar ist.

Eine derartige Kalanderwalze und ein derartiges Verfahren sind aus EP 0 779 394 A1 bekannt.

Derartige Kalanderwalzen werden vielfach als Mittelwalzen in einem Kalander eingesetzt, bilden also einen Teil eines Walzenstapels. Benachbarte Walzen bilden hierbei Nips, durch die eine Materialbahn geführt wird, um dort mit erhöhtem Druck und gegebenenfalls erhöhter Temperatur beaufschlagt zu werden.

Eine weit verbreitete Anwendung finden derartige Walzen bei der Behandlung einer Papierbahn, die im folgenden als Beispiel zur Erläuterung der Erfindung verwendet werden soll. Die gleiche Problematik ergibt sich aber auch bei anderen Materialbahnen.

In derartigen Kalandern wirken in der Regel sogenannte "weiche" Walzen mit "harten" Walzen zusammen. Vereinzelt wirken auch zwei "weiche" Walzen zusammen. Die weichen Walzen sind hierbei mit einem Kunststoffbelag bezogen. Man hat nun beobachtet, daß nach einer gewissen Betriebszeit derartiger Kalander ein sogenanntes Barring zu beobachten ist. Diese Barring-Erscheinung bewirkt einerseits ein unerwünschtes streifenförmiges Muster auf der Papierbahn. Man kann diese Streifen aber auch als streifenförmige Markierungen an den elastischen Walzen mit den Kunststoffbelägen erkennen. Die weichen Walzen werden sozusagen vieleckig. Ab einer gewissen Stärke oder Intensität führen diese Barrings zu Ausschuß bei der Papierbahn. Die entsprechende Walze oder die entsprechenden Walzen müssen dann überarbeitet werden, um die Verformung des Kunststoffbelages zu beseitigen. In der Regel ist dies mit einem Abdrehen der Walze verbunden.

Bei der aus EP 0 779 394 A1 bekannten Walze versucht man diese Schwingungsausbildung dadurch zu unterdrükken, daß man die Härte des elastischen Belags im Betrieb ändert. Hierzu wird die Temperatur des Belags geändert, indem man kältere oder heißere Flüssigkeit in die Walze leitet.

Der Erfindung liegt die Aufgabe zugrunde, die Barring-Erscheinung zu vermindern.

Diese Aufgabe wird bei einem Verfahren der eingangs genannten Art dadurch gelöst, daß man die Masse der Kalanderwalze während des Betriebs durch Zufuhr und Abfuhr einer Fremdmasse, die die Masse der Kalanderwalze um 10 bis 15 % ihrer Grundmasse erhöht, über eine Versorgungsanschlußanordnung oder Veränderung einer Massenverteilung innerhalb der Walze verändert. Hierbei geht man von folgenden Überlegungen aus:

Ein Walzenstapel, der aus mehreren Walzen gebildet wird, hat eine Vielzahl von Eigenfrequenzen. Bei diesen Eigenfrequenzen gibt es beispielsweise Biegeeigenfrequenzen, die im vorliegenden Fall weniger interessieren, und Eigenschwingungsformen, die sich aus den schwingenden Walzenmassen auf den Feder- und Dämpfersystemen ergeben, die durch die zwischen den Walzen befindlichen Kunststoffbeläge und daneben durch die Walzenlagerungen gebildet sind. Ein laufender Kalander erzeugt nun Erregerkräfte, deren Frequenzen mit den Walzendrehzahlen zusammenhängen und in erster Nährung jeweils vielfachen der Drehfrequenzen entsprechen. Diese Erregerkräfte können viele Ursachen haben, beispielsweise Inhomogenitäten, Anisotropien oder Geometriefehler. Auch können Papierdickenschwankungen der den Kalander durchlaufenden Papierbahn den Walzenstapel erregen. Wenn nun eine dieser Erregerfrequenzen auf eine Eigenfrequenz trifft, so antwortet das Schwingungssystem mit vergrößerten Schwingungsausschlägen. Aufgrund der Vielzahl der möglichen Erreger und der Vielzahl der möglichen Eigenschwingungsformen lassen sich diese Resonanzstellen konstruktiv praktisch nicht umgehen. In der Regel ist das Schwingungssystem auch so stark gedämpft und die Erregerkräfte sind so klein, daß die resultierende Schwingbewegung nicht unmittelbar stört. Erst über einen mehr oder weniger längeren Zeitraum prägen sich diese Schwingungsbewegungen jedoch in die Kunststoffbeläge der elastischen Walze ein. Man kann vielfach beobachten, daß die nächstliegenden ganzzahligen Vielfachen der Schwingungsfrequenz als Muster auf den Walzen eingeprägt werden. Hierdurch erfolgt wiederum eine Rückkopplung der Schwingung. Die Schwingungsausschläge nehmen dann expotentiell zu. Sie äußern sich einerseits in einem erhöhten Schallpegel (bis mehr als 115 dB (A)) und andererseits in periodischen Dickenschwankungen der durchlaufenden Papierbahn, die - wie oben erwähnt - zu Ausschuß führen. Erfindungsgemäß wird nun zur Vermeidung des oben beschriebenen Rückkopplungseffektes der Entstehungsmechanismus der periodischen Belagwelligkeit gestört. Um zu vermeiden, daß sich ein konstantes ganzzahliges Muster mit einer Frequenz nahe der Eigenfrequenz des Systems auf den Walzen einprägt, greift man mit der Veränderung der Masse der Kalanderwalze in das Schwingungssystem ein und verändert die entsprechenden Eigenfrequenzen. Durch eine Veränderung der Eigenfrequenzen sorgt man dafür, daß das schwingende System nicht über einen längeren Zeitraum mit einer Resonanzfrequenz betrieben werden kann, die wiederum schädliche Auswirkungen, insbesondere im Hinblick auf die Barringbildung, haben kann. Die Grundmasse ist sozusagen das "Leergewicht" der Kalanderwalze. Man hat nun festgestellt, daß man bei Massenveränderungen von ca. 10 bis 15 % der Walzenmasse eine Änderung der Eigenfrequenz der Kalanderwalze in der Größenordnung von 4 bis 7 % erzielen kann. Diese Veränderung reicht aus, um eine Barringbildung nicht entstehen zu lassen. In den meisten Fällen wird man zur Veränderung der Masse der Kalanderwalze tatsächlich Massen zu- bzw. abführen. In manchen Fällen wird es allerdings ausreichen, wenn man die Massenverteilung innerhalb der Kalanderwalze verändert, d.h. beispielsweise Massen von radial innen nach radial außen verlagert. Eine derartige Veränderung beeinflußt unter anderem das Trägheitsmoment.

Vorzugsweise verändert man die Masse während des Betriebs fortlaufend. Man sorgt also dafür, daß die Masse der Kalanderwalze im Betrieb kontinuierlich zu- oder abnimmt. Damit wird auch fortlaufend die Resonanzfrequenz geändert, so daß man mit relativ großer Sicherheit die Ausbildung einer stationären Resonanzfrequenz vermeiden kann, die zu der unerwünschten Barringbildung führt.

Vorzugsweise führt man während des Betriebs eine vorbestimmte Flüssigkeitsmenge zu und diese Flüssigkeitsmenge danach wieder ab. Mit Hilfe einer Flüssigkeit läßt sich die Massenveränderung der Kalanderwalze auf einfache Art und Weise erzielen. Die Flüssigkeit hat den Vorteil, daß sie sich aufgrund der Zentrifugalkraft, die im Betrieb im Innern der Kalariderwalze herrscht, relativ schnell über die gesamte axiale Länge der Kalanderwalze und über ihren gesamten Innenumfang ausbreitet, so daß sich durch die Zu- und Abfuhr einer Flüssigkeit keine lokalen Unwuchten ergeben können. Die Zu- und Abführ von Flüssigkeit an sich ist zwar bekannt, beispielsweise zu Kühl- oder Heizzwecken. Im bekannten Fall ist man jedoch bestrebt, die Masse der durchgepumpten Flüssigkeit konstant zu halten. Erfindungsgemäß hingegen ist vorgesehen, daß man mit Hilfe der Flüssigkeit eine Massenveränderung der Kalanderwalze erzielt.

Vorzugsweise legt man die Flüssigkeit an die Innenwand des Walzenmantels an. Man leitet also die Flüssigkeit gezielt so, daß sie sich möglichst ohne Ausbildung einer Luftschicht schwingungstechnisch mit der Kalanderwalze verbindet. Damit stellt man sicher, daß die Flüssigkeitsmasse an der Schwingungsbewegung beteiligt ist. Würde Luft zwischen der Flüssigkeit und der Kalanderwalze verbleiben, könnte diese wegen ihrer Kompressibilität nach Art einer Feder anders schwingen, als die Kalanderwalze selbst.

Bevorzugterweise läßt man die Flüssigkeit mit der Walze rotieren. Gegebenenfalls ist es hierzu erforderlich, daß man Mitnehmer in der Walze für die Flüssigkeit vorsieht. Damit wird die Flüssigkeit auch im Hinblick auf die Rotationsbewegung der Walze ein "Bestandteil" der Walze, ist ihrer Masse also auch in jeder Hinsicht zuzurechnen.

Bevorzugterweise bläst man die Flüssigkeit mit Hilfe von Druckluft aus der Walze aus. Anstelle von Druckluft kann man natürlich auch ein anderes Druckgas verwenden. Druckluft ist jedoch aus Kostengründen von Vorteil. Damit erspart man sich aufwendige Pumpmechanismen, die entweder die Flüssigkeit aus dem Innern der Kalanderwalze abpumpen oder absaugen. Mit Hilfe der Druckluft kann man dafür sorgen, daß auch beim Entleeren der Kalanderwalze, d.h. beim Abführen der Flüssigkeit, immer der Kontakt zwischen der Flüssigkeit und der Kalanderwalze erhalten bleibt.

Vorzugsweise verwendet man das Auftreten von Luft in der Flüssigkeitsabführleitung als Signal für ein erneutes Befüllen der Kalanderwalze mit Flüssigkeit. Damit erspart man sich aufwendige Kontrolleinrichtungen, die überwachen, ob die Kalanderwalze in einem ausreichendem Maß entleert worden ist. Erforderlich ist lediglich, daß man überprüft, ob in der Flüssigkeitsabfuhrleitung, die im übrigen identisch sein kann mit der Flüssigkeitszufuhrleitung, Luft auftritt oder nicht. Diese Überprüfung kann man beispielsweise auch dadurch anstellen, daß man die Druckdifferenz für die Ausblasluft ermittelt. In dem Augenblick, wo genügend Flüssigkeit aus der Kalanderwalze entfernt worden ist, die Luft sozusagen ungehindert vom Eingang zum Ausgang strömen kann, wird ein starker Druckabfall auftreten, der als Signal verwendet werden kann, das die Walze nun in ausreichendem Maße entleert worden ist.

Mit Vorteil wird die Flüssigkeit temperiert. Man kann also die Flüssigkeit erwärmen oder kühlen. Insbesondere dann, wenn die Kalanderwalze selbst einen elastischen Bezug oder Belag aufweist, ist es mit Hilfe der Flüssigkeit möglich, Wärme, die beispielsweise durch die Walkarbeit des elastischen Belages entsteht, abzuführen. Da damit die Wärme nicht gleichförmig, sondern quasi chargenweise abgeführt wird, wird sich eine konstante Temperatur damit nur in Ausnahmefällen erzielen lassen. Dies ist jedoch auch nicht erforderlich, weil es im Grunde genommen nur darauf ankommt, eine Überhitzung des Belages zu vermeiden.

Vorzugsweise gleicht man die Massenänderung der Kalanderwalze durch Biegeausgleichswalzen und/oder Gewichtskompensationszylinder der Kalanderwalze aus. Wenn man die Masse der Kalanderwalze durch Zufuhr von Fremdmassen erhöht, dann ändern sich natürlich auch die Verhältnisse, insbesondere die Druckbelastung, in den einzelnen Nips des Walzenstapels. Dieser an sich unerwünschte Effekt kann jedoch durch die Steuerung der oberen und unteren im Walzenstapel befindlichen Biegeausgleichswalzen und der Gewichtskompensationszylinder der Mittelwalzen, mit denen heute die überwiegende Anzahl der modernen Kalander ausgerüstet ist, ausgeglichen werden.

Die Aufgabe wird auch bei einer Kalanderwalze der eingangs genannten Art dadurch gelöst, daß die Versorgungsanschlußanordnung mit einer Massenveränderungseinrichtung verbunden ist, die der Walze eine Fremdmasse von 10 bis 15 % der Grundmasse der Kalanderwalze zu- und abführt.

Eine Versorgungsanschlußanordnung ist von Walzen her bekannt, die mit Hilfe von temperierter Flüssigkeit beheizt oder gekühlt werden. Dieser Gesichtspunkt ist jedoch bei der vorliegenden Erfindung nur von untergeordneter Bedeutung. Erfindungsgemäß sorgt man mit der Versorgungsanschlußanordnung dafür, daß sich die Masse der Kalanderwalze durch Zufuhr oder Abfuhr einer "Fremdmasse" verändert. Damit greift man in das Schwingungssystem des Walzenstapels ein und verändert fortlaufend oder von Zeit zu Zeit die Eigenfrequenz. Damit wird die Ausbildung von Resonanzfrequenzen gestört und die Barringbildung vermieden oder zumindest drastisch vermindert.

Vorzugsweise speist die Massenveränderungseinrichtung abwechselnd Luft und eine Flüssigkeit in die Versorgungsanschlußanordnung ein. Wenn die Flüssigkeit eingespeist wird, erhöht sich die Masse.

Hierbei ist besonders bevorzugt, daß die Massenveränderungseinrichtung mit Hilfe der Luft die Flüssigkeit verdrängt. Damit kann man die Luft zur Verminderung der Masse der Kalanderwalze verwenden.

Vorzugsweise sind die Einspeiserichtungen von Flüssigkeit und Luft einander entgegengesetzt. Man hat also sozusagen eine Flüssigkeitsleitung und eine Luftleitung. Dies hat den Vorteil, daß man in jeder Leitung eine auf das jeweilige Fluid abgestimmte Pumpe (oder einen anderen Druckerzeuger) vorsehen kann. Komplizierte Ventile oder andere Steuermechanismen können weitgehend entfallen.

Vorzugsweise weist die Versorgungsanschlußanordnung eisnen Flüssigkeitsanschluß auf, dem eine Stauscheibe gegenüberliegt, die bis auf einen Spalt vorbestimmter Dicke an die Innenwand des Walzenmantels heranreicht. Mit dieser Stauscheibe stellt man sicher, daß die über den Flüssigkeitsanschluß eingespeiste Flüssigkeit unmittelbar radial nach außen geführt wird und sich, wegen des Spaltes, an die Innenwand des Walzenmantels anlegt. Damit vermeidet man, daß zwischen dem Walzenmantel und der Flüssigkeit Luft im System verbleibt. In diesem Fall würde nur ein geringerer Anteil der Flüssigkeitsmasse an der Schwingbewegung unmittelbar beteiligt sein. Ein verbleibender Teil könnte durch die Luft "abgefedert" werden.

Hierbei ist bevorzugt, daß die Versorgungsanschlußanordnung einen Luftanschluß aufweist, der die Stauscheibe durchsetzt. Die eingespeiste Luft wirkt dann radial von innen nach außen auf die an der Innenwand des Walzenmantels anliegende Flüssigkeit und kann sie durch den Spalt zwischen Stauscheibe und Innenwand des Walzenmantels wieder zurückdrängen. Die beiden Medien Luft und Flüssigkeit haben dementsprechend definierte Druckangriffsrichtungen, mit deren Hilfe sich das Vergrößern und Verkleinern der Masse der Kalanderwalze sehr gut steuern läßt.

Vorzugsweise sind zwischen der Stauscheibe und den Walzenzapfen radial verlaufende Kanäle angeordnet. Dies hat den Vorteil, daß die eingespeiste Flüssigkeit sofort auch in Rotationsrichtung der Kalanderwalze mit beschleunigt wird. Bezogen auf die Kalanderwalze bleibt die eingespeiste Flüssigkeit dann stationär in der Kalanderwalze.

Mit Vorteil ist im Luftanschluß ein Flüssigkeitssensor angeordnet. Damit kann man auf einfache Weise den Füllvorgang beenden und als entsprechendes Signal bewerten, wenn größere Mengen Flüssigkeiten aus der Luftleitung austreten.

Auch ist von Vorteil, wenn im Flüssigkeitsanschluß ein Luftsensor angeordnet ist. Diesen Sensor kann man verwenden, um den Entleerungsvorgang zu steuern. Dieser ist beendet, wenn Luft aus den Kanälen der Stauscheibe aus und damit in den Flüssigkeitsanschluß eintritt.

Alternativ oder zusätzlich dazu kann die Massenveränderungseinrichtung einen Drucksensor für die Luftzufuhr aufweisen. Wenn die Luft aus den Kanälen der Stauscheibe austritt, wird dies mit einem meßbaren Druckunterschied verbunden sein, der als Steuerungssignal für das Abschalten des Entleerungsvorgangs verwendet werden kann. In ähnlicher Weise kann natürlich auch der Befüllvorgang über einen meßbaren Druckunterschied beim ausströmenden Wasser zu Luft aus der Luftleitung gesteuert werden.

Die Erfindung wird im folgenden anhand von bevorzugten Ausführungsbeispielen in Verbindung mit der Zeichnung näher beschrieben. Hierin zeigen:

Fig. 1  eine schematische Ansicht eines Kalanders mit Größen zur Erläuterung von Schwingungen,

Fig. 2  einen schematischen Längsschnitt durch eine Kalanderwalze,

Fig. 3  eine Draufsicht auf eine Stauscheibe und

Fig. 4  einen Längsschnitt einer abgewandelten Ausführungsform einer Kalanderwalze.

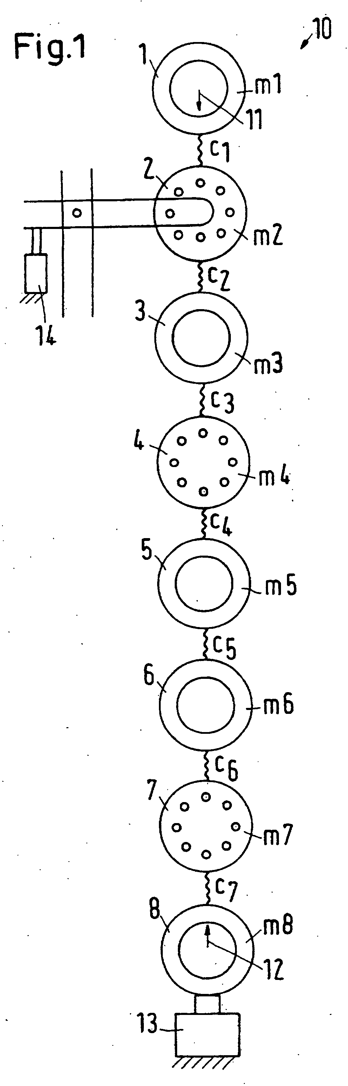

Fig. 1 zeigt schematisch einen Kalander 10, d. h. einen Stapel von übereinander angeordneten Kalanderwalzen 1-8. Die oberste Walze 1 und die unterste Walze 8 sind als Biegeeinstellwalzen ausgebildet. Von den Zwischenwalzen ist die zweite, vierte und siebte von oben als Heizwalze ausgebildet, während die dritte, fünfte und sechste Walze als elastischen Walzen ausgebildet sind. Jeweils benachbarte Walzen bilden zwischen sich einen Nip, der zum Behandeln einer Materialbahn verwendet wird, d.h. zum Beaufschlagen der nicht näher dargestellten Materialbahn mit Druck und gegebenenfalls einer erhöhten Temperatur. Neben den Biegeeinstellwalzen mit ihren hydraulischen Stützelementen 11, 12 sind als Steuermöglichkeiten noch ein Zylinder 13 unterhalb des Kalanders 10 vorhanden sowie gegebenenfalls für jede der Mittelwalzen 2-7 ein Gewichtskompensationszylinder 14, der aus Gründen der Übersicht nur für die Mittelwalze 2 dargestellt ist. Auch das Kalandergestell wurde weggelassen.

Jede der Walzen 1-8 weist eine Walzenmasse m1-m8 auf. Der Einfachheit halber sei angenommen, daß jeweils nur benachbarte Walzen über eine Feder mit der Federsteifigkeit cl-c7 verbunden ist. Damit bildet der Kalander 10 ein System eines Mehrmassenschwingers. Im Betrieb ergeben sich dadurch entsprechend viele Eigenfrequenzen, von denen jede dann, wenn eine Anregungsfrequenz sich in der gleichen Größenordnung befindet, zu einer Resonanz führen kann. Man nimmt nun an, daß sich bei bestimmten Resonanzfrequenzen ein Barring ausbilden kann, das sich in einer Abfolge von Streifen auf der zu behandelnden Materialbahn äußert. Man kann insbesondere bei den elastischen Walzen 3, 5, 6 beobachten, daß diese Walzen eine dem Streifenabstand entsprechende Vieleckigkeit aufweisen. Diese Vieleckigkeit und die Streifenbildung treten allerdings erst nach einer gewissen Betriebszeit auf. Man kann beobachten, daß bei einer Störung des Betriebs, d.h. beim Auftreten von anderen Frequenzen, die Vieleckigkeit verschwindet oder auch nur umgeformt wird. Man hat daher versucht, auf die Eigenfrequenzen Einfluß zu nehmen und ist hierbei auf den Ansatz gekommen, die Masse mindestens einer Walze zu verändern.

Bei einem in Produktion befindlichen Kalander konnte man ermitteln, daß eine elastische Mittelwalze 3 zwischen zwei Heizwalzen 2, 4 mit einer Frequenz von f = 430 Hz schwingt. Die auf einen Meter bezogene Masse der Walze 3 beträgt 1387 kg/m. Über einen einfachen Anlaß der Eigenfrequenz eines Einmassenschwingers

$$\omega^2 = c/m$$

kann der Einfluß der Massenvariation abgeschätzt werden. Dabei entspricht

ω    der Kreisfrequenz ($\omega = 2 \cdot \pi \cdot f$),
c    der Federsteifigkeit und
m    der schwingenden Masse.

Aus der gemessenen Eigenfrequenz und der Walzenmasse folgt hiermit eine Federsteifigkeit, die beispielsweise auf das Kompressionsverhalten der elastischen Beläge zurückzuführen ist. Die Federsteifigkeit ergab sich hierbei zu etwa

$$C = 10^{10} \text{ N/m/m.}$$

Dies entspricht im wesentlichen der Steifigkeit zweier parallel geschalteten Einzelfedersteifigkeiten eines Kunststoffbelages.

Wenn man voraussetzt, daß sich die Federsteifigkeit bei einer Veränderung der Masse nicht verändert (dies kann in erster Nährung durchaus angenommen werden), kann mit dem gleichen Berechnungsmodell die sich ergebende Eigenfrequenz nach einer Änderung der Masse der Walze berechnet werden

$$\omega^2 = c/(m + \Delta m)$$

Um die Masse zu verändern, wurde der Weg gewählt, eine bestimmte Flüssigkeitsmenge in die Walze einzuspeisen bzw. nach einer bestimmten Betriebszeit aus ihr zu entfernen. Die in die Mittelwalze 3 einfüllbare Flüssigkeitsmasse Am beträgt 195 kg/m.

Damit ergibt sich eine neue Eigenfrequenz von 402,6 Hz. Durch eine Masseveränderung der Walze von 14 % folgt somit eine Änderung der Eigenfrequenz von 6,4 %.

Bei einer Produktionsgeschwindigkeit von 1200 m/min und einem Außendurchmesser der Walze 3 von 717 mm folgt damit eine Barringmusterumprägung von 48,4 bis 49 Wellen auf 45,3 bis 45 Wellen. In diesem Fall prägen sich aufgrund der Phasenlage der Schwingungsbewegungen der Walzen zueinander immer nur ungerade ganzzahlige Vielfache der Eigenfrequenz auf der Mittelwalze ein.

Um die Masse der Walze zu verändern, verwendet man eine Flüssigkeit, vorzugsweise Wasser. Hierbei muß die Veränderung der Walzenmasse relativ zügig ablaufen können, damit sich ein bestimmtes Muster auf dem elastischen Belag nicht einprägen kann.

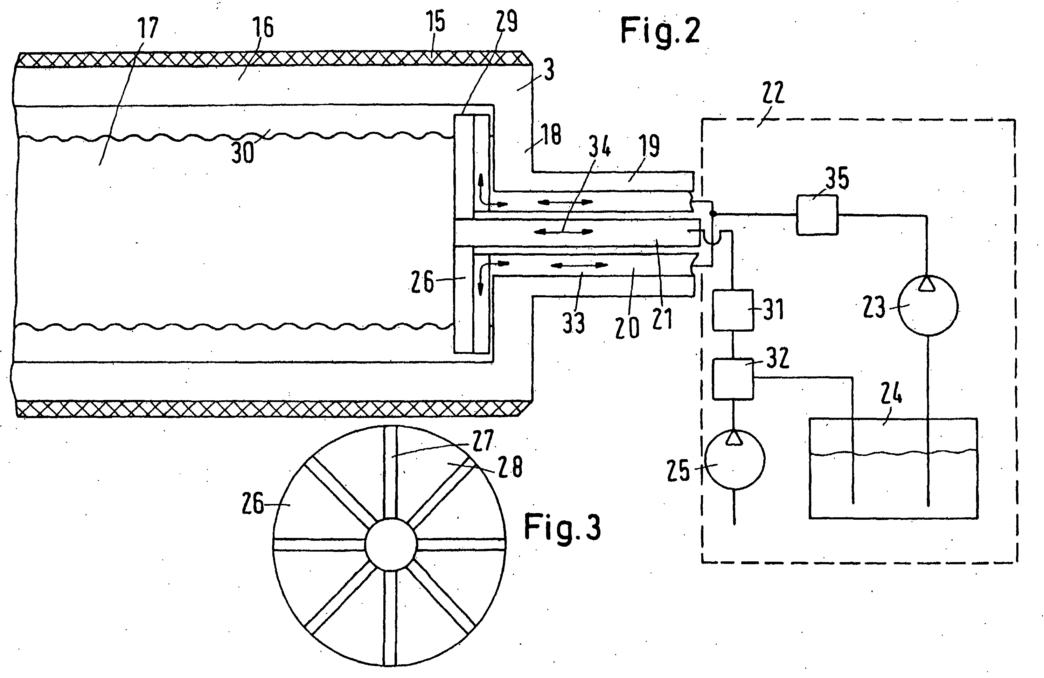

Eine Realisierung wird anhand des in Fig. 2 und 3 dargestellten Ausführungsbeispiels erläutert.

Die Walze 3 weist einen elastischen Belag 15 auf. Der elastische Belag 15 ist auf einem Walzenmantel 16 angeordnet, der einen hohlen Innenraum 17 umschließt. An den Stirnseiten ist der Innenraum durch Zapfenscheiben 18 verschlossen, die in Walzenzapfen 19 übergehen. Die Walzenzapfen 19 weisen in an sich bekannter Art und Weise einen Versorgungsanschlußanordnung auf mit einem ersten Kanal 20 und einem zweiten Kanal 21. Die beiden Kanäle 20, 21 bilden eine Versorgungsanschlußanordnung und sind über eine nicht näher dargestellte Rotationsdurchführung mit einer Massenveränderungseinrichtung 22 verbunden. Die Massenveränderungseinrichtung 22 weist eine Flüssigkeitspumpe 23 auf, die zwischen dem ersten Kanal 20 und einem Flüssigkeitsreservoir 24 angeordnet ist. Die Pumpe 23 ist also in der Lage, die Flüssigkeit aus dem Flüssigkeitsreservoir 24 in den Innenraum 17 der Kalanderwalze 3 zu pumpen.

Die Massenveränderungseinrichtung 22 weist ferner eine zweite Pumpe 25 auf, die Luft komprimiert. Diese Pumpe 25 ist mit dem zweiten Kanal 21 verbunden, der ebenfalls in den Innenraum 17 gerichtet ist. Die Pumpe 25 ist also in der Lage, den Innenraum 17 mit Druckluft zu befüllen.

Dort, wo der erste Kanal 20 in den Innenraum 17 der Kalanderwalze 3 mündet, ist eine Stauscheibe 26 vorgesehen. Die Stauscheibe 26 dreht mit dem Walzenmantel 16 mit. Sie weist auf ihrer dem ersten Kanal zugewandten Seite Stege 27 auf, die zwischen sich radial nach außen verlaufende Kanäle 28 bilden. In den Raum zwischen Staubscheibe 26 und Zapfenscheibe 18 eingespeiste Flüssigkeit wird also durch die Stege 27 radial nach außen geleitet und dabei gleichzeitig auf die Drehzahl der Kalanderwalze 3 beschleunigt. Der zweite Kanal 21 durchsetzt die Stauscheibe 26, mündet also etwa in der radialen Mitte des Innenraums 17.

Die Stauscheibe 26 bildet zur Innenwand des Walzenmantels einen relativ schmalen Spalt 29. Dieser Spalt 29 ist so bemessen, daß Flüssigkeit, die durch den ersten Kanal 20 und die Kanäle 28 zugeführt wird, unmittelbar an die Innenwand des Walzenmantels 16 zur Anlage kommt. Man vermeidet also, daß zwischen der Flüssigkeit und dem Walzenmantel 16 Luft verbleibt.

Wenn nun die Pumpe 23 betätigt wird und Flüssigkeit aus dem Reservoir 24 in den Innenraum 17 pumpt, dann entsteht an der Innenseite des Walzenmantels eine Flüssigkeitsschicht 30. Die Flüssigkeit wird aufgrund der Rotation der Kalanderwalze 3 immer radial nach außen gedrückt. Das Befüllen der Kalanderwalze 3 mit Flüssigkeit kann solange fortgesetzt werden, bis die Kalanderwalze 3, genauer gesagt, ihr Innenraum 17, nahezu vollständig gefüllt ist und die Flüssigkeit durch den zweiten Kanal 21 austritt. Dieser Zustand wird durch einen Sensor 31 ermittelt, der daraufhin ein Ventil 32 umschaltet, um weiter austretende Flüssigkeit in das Reservoir 24 zurückzuleiten. Gleichzeitig schaltet der Sensor 31 die Pumpe 23 ab und die Pumpe 25 ein. Dadurch wird die Flüssigkeit 30 aus dem Innenraum 17 der Kalanderwalze 3 verdrängt und fließt durch den ersten Kanal 20 wieder in das Reservoir 24 zurück. Sowohl im ersten Kanal 20 als auch im zweiten Kanal 21 drehen sich die Strömungsrichtung von Flüssigkeit bzw. Luft um, was durch Doppelpfeile 33, 34 angedeutet ist.

Das Entleeren des Innenraums 17 der Kalanderwalze 3 wird so lange fortgesetzt, bis Luft durch den ersten Kanal 20 hindurchtritt. Dies kann durch einen Sensor 35 erkannt werden, der dann seinerseits die Pumpe 23 einund die Pumpe 25 ausschaltet. Gegebenenfalls kann man auf den Sensor 35 in der Leitung zwischen dem Reservoir 24 und dem ersten Kanal 20 verzichten, wenn man eine Druckänderung hinter der zweiten Pumpe 25 ermittelt. Wenn nämlich die gesamte Flüssigkeit aus dem Innenraum 17 entfernt worden ist, dann ergibt sich eine deutliche Druckänderung in dem ersten Kanal 21.

Das Befüllen und Entleeren kann relativ schnell erfolgen. Beispielsweise kann ein Zyklus innerhalb von ein oder zwei Minuten beendet werden.

Wenn man nun durch Zuführen und Abführen von Flüssigkeit die Masse der Kalanderwalze 3 fortlaufend erhöht und absenkt, dann kann man, wie oben dargestellt, eine entsprechende Veränderung der Eigenfrequenz erreichen und damit das Ausbilden von länger anhaltenden Resonanzfrequenzen verhindern.

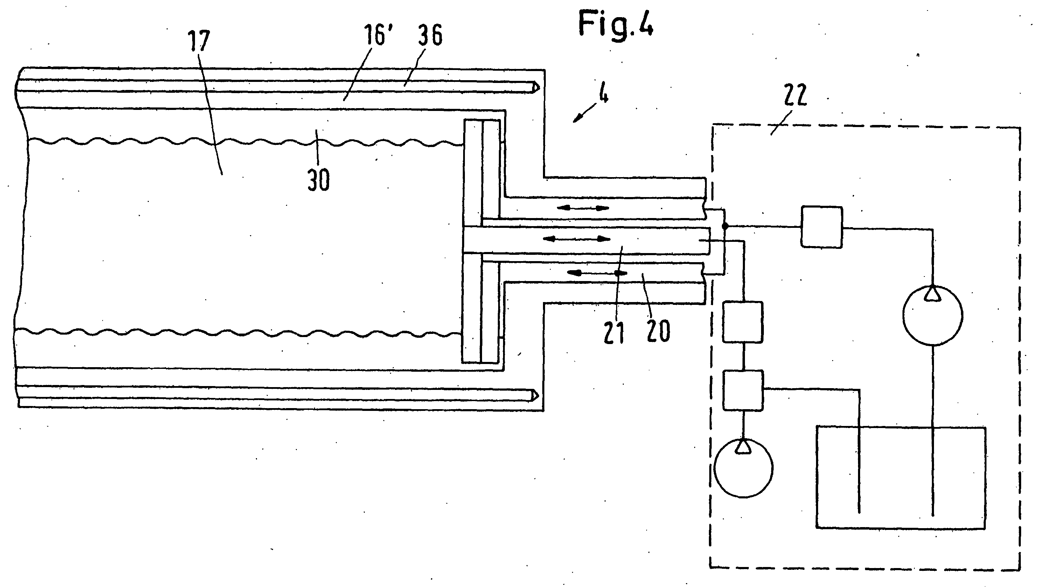

Man ist allerdings nicht darauf beschränkt, die Masseänderung an den elastischen Walzen 3, 5, 6 zu bewirken. Auch dann, wenn die Masseveränderung an einer Heizwalze bewirkt wird, kann man eine entsprechende Barringbildung an den elastischen Walzen 3, 5, 6 vermeiden oder zumindest vermindern. Fig. 4 zeigt eine Heizwalze 4, bei der gleiche Elemente wie bei der weichen Walze 3 mit den gleichen Bezugszeichen versehen worden sind. Entsprechende Elemente sind mit gestrichenen Bezugszeichen versehen.

Der Walzenmantel 16' weist nun periphere Bohrungen 36 auf, in denen ein Wärmeträgermedium zirkulieren kann. Das Wärmeträgermedium wird beispielsweise am anderen Walzenende zu- und abgeführt. Dafür fehlt der elastische Belag 15.

Auch bei einer derartigen Walze 4 kann der Innenraum 17 abwechselnd mit Flüssigkeit und mit Luft befüllt werden, wodurch sich Massenänderungen um etwa 10 bis 15 % ergeben können.

Selbstverständlich kann auch die Flüssigkeit, die dem Innenraum 17 zugeführt und die von dort wieder abgeführt wird, verwendet werden, um gewisse Wärmemengen von innen nach außen oder von außen nach innen zu transportieren. Insbesondere bei der Kalanderwalze 3 mit elastischem Bezug 15 kann man die Flüssigkeit verwenden, um beispielsweise durch Walkarbeit erzeugte Wärme abzuführen. Diese Wärmeabfuhr erfolgt zwar nicht kontinuierlich. Sie reicht aber aus, um ein Überhitzen des Belages 15 zu vermeiden. Im Vordergrund steht jedoch die Änderung der Masse der Walzen 3, 4.

**Patentansprüche**

1. Verfahren zum Betreiben einer Kalanderwalze (3, 4), die rotierend mit mindestens einer weiteren Kalanderwalze (5, 6) eines Walzenstapels (10) zusammenwirkt und einen Walzenmantel (16, 16') aufweist, wobei mindestens eine Kalanderwalze (3) des Walzenstapels (10) einen elastischen Belag (15) aufweist, **dadurch gekennzeichnet, daß** man die Masse der Kalanderwalze (3, 4) während des Betriebs durch Zufuhr und Abfuhr einer Fremdmasse, die die Masse der Kalanderwalze (3, 4) um 10 bis 15 % ihrer Grundmasse erhöht, über eine Versorgungsanschlußanordnung (20, 21) verändert.

2. Verfahren nach Anspruch 1, **dadurch gekennzeichnet, daß** man die Masse während des Betriebs fortlaufend verändert.

3. Verfahren nach Anspruch 1 oder 2, **dadurch gekennzeichnet, daß** man während des Betriebs eine vorbestimmte Flüssigkeitsmenge zuführt und diese Flüssigkeitsmenge danach wieder abführt.

4. Verfahren nach Anspruch 3, **dadurch gekennzeichnet, daß** man die Flüssigkeit (30) an die Innenwand des Walzenmantels (16, 16') anlegt.

5. Verfahren nach Anspruch 3 oder 4, **dadurch gekennzeichnet, daß** man die Flüssigkeit (30) mit der Walze rotieren läßt.

6. Verfahren nach einem der Ansprüche 3 bis 5, **dadurch gekennzeichnet, daß** man die Flüssigkeit (30) mit Hilfe von Druckluft aus der Walze ausbläst.

7. Verfahren nach Anspruch 6, **dadurch gekennzeichnet, daß** man das Auftreten von Luft in der Flüssigkeitsabführleitung als Signal für ein erneutes Befüllen der Kalanderwalze mit Flüssigkeit (30) verwendet.

8. Verfahren nach einem der Ansprüche 3 bis 7, **dadurch gekennzeichnet, daß** die Flüssigkeit (30) temperiert wird.

9. Verfahren nach einem der Ansprüche 1 bis 8, **dadurch gekennzeichnet, daß** man die Massenänderung der Kalanderwalze durch Biegeausgleichswalzen (1, 8) und/oder Gewichtskompensationszylinder der Kalanderwalze ausgleicht.

10. Kalanderwalze mit einem Walzenmantel (16, 16') und einer mit einem vom Walzenmantel (16, 16') umschlossenen Innenraum (17) verbundenen Versorgungsanschlußanordnung (20, 21), wobei die Kalanderwalze (3, 4) mit mindestens einer weiteren Kalanderwalze (5, 6) eines Walzenstapels (10), der mindestens eine Kalanderwalze (4) mit einem elastischen Belag (15) aufweist, zusammenwirkend betreibbar ist, **dadurch gekennzeichnet, daß** die Versorgungsanschlußanordnung (20, 21) mit einer Massenveränderungseinrichtung (22) verbunden ist, die der Walze eine Fremdmasse von 10 bis 15 % der Grundmasse der Kalanderwalze (3, 4) zu- und abführt.

11. Kalanderwalze nach Anspruch 10, **dadurch gekennzeichnet, daß** die Massenveränderungseinrichtung (22) abwechselnd Luft und eine Flüssigkeit in die Versorgungsanschlußanordnung (20, 21) einspeist.

12. Kalanderwalze nach Anspruch 11, **dadurch gekennzeichnet, daß** die Massenveränderungseinrichtung (22) mit Hilfe der Luft die Flüssigkeit verdrängt.

13. Kalanderwalze nach Anspruch 11 oder 12, **dadurch gekennzeichnet, daß** die Einspeiserichtungen von Flüssigkeit und Luft einander entgegengesetzt sind.

14. Kalanderwalze nach einem der Ansprüche 11 bis 13, **dadurch gekennzeichnet, daß** die Versorgungsanschlußanordnung (20, 21) einen Flüssigkeitsanschluß (20) aufweist, dem eine Stauscheibe (26) gegenüberliegt, die bis auf einen Spalt (29) vorbestimmter Dicke an die Innenwand des Walzenmantels (16) heranreicht.

15. Kalanderwalze nach Anspruch 14, **dadurch gekennzeichnet, daß** die Versorgungsanschlußanordnung (20, 21) einen Luftanschluß (21) aufweist, der die Stauscheibe (26) durchsetzt.

16. Kalanderwalze nach Anspruch 14 oder 15, **dadurch gekennzeichnet, daß** zwischen der Stauscheibe (26) und den Walzenzapfen (18, 19) radial verlaufende Kanäle (28) angeordnet sind.

17. Kalanderwalze nach Anspruch 15 oder 16, **dadurch gekennzeichnet, daß** im Luftanschluß ein Flüssigkeitssensor (31) angeordnet ist.

18. Kalanderwalze nach einem der Ansprüche 14 bis 17, **dadurch gekennzeichnet, daß** im Flüssigkeitsanschluß (20) ein Luftsensor (35) angeordnet ist.

19. Kalanderwalze nach einem der Ansprüche 14 bis 18, **dadurch gekennzeichnet, daß** die Massenveränderungseinrichtung (22) einen Drucksensor für die Luftzufuhr aufweist.

**Claims**

1. Method for operating a calender roll (3, 4) which, while rotating, interacts with at least one further calender roll (5, 6) belonging to a roll stack (10) and has a roll shell (16, 16'), at least one calender roll (3) of the roll stack (10) having a resilient cover (15), **characterized in that** the mass of the calender roll (3, 4) is changed during operation as a result of the supply and discharge of an external mass, which increases the mass of the calender roll (3, 4) by 10 to 15% of its basic mass, via a supply connection arrangement (20, 21).

2. Method according to Claim 1, **characterized in that** the mass is changed progressively during operation.

3. Method according to Claim 1 or 2, **characterized in that**, during operation, a predetermined volume of fluid is supplied and this volume of fluid is then discharged again.

4. Method according to Claim 3, **characterized in that** the fluid (30) is placed against the inner wall of the roll shell (16, 16').

**5.** Method according to Claim 3 or 4, **characterized in that** the fluid (30) is allowed to rotate with the roll.

**6.** Method according to one of Claims 3 to 5, **characterized in that** the fluid (30) is blown out of the roll with the aid of compressed air.

**7.** Method according to Claim 6, **characterized in that** the occurrence of air in the fluid discharge line is used as a signal for renewed filling of the calender roll with fluid (30).

**8.** Method according to one of Claims 3 to 7, **characterized in that** the temperature of the fluid (30) is controlled.

**9.** Method according to one of Claims 1 to 8, **characterized in that** the mass change of the calender roll is compensated for by means of controlled deflection rolls (1, 8) and/or weight compensation cylinders belonging to the calender roll.

**10.** Calender roll having a roll shell (16, 16') and a supply connection arrangement (20, 21) connected to an internal space (17) enclosed by the roll shell (16, 16'), it being possible for the calender roll (3, 4) to be operated while interacting with at least one further calender roll (5, 6) belonging to a roll stack (10), which has at least one calender roll (4) with a resilient cover (15), **characterized in that** the supply connection arrangement (20, 21) is connected to a mass changing device (22), which supplies to and discharges from the roll an external mass of 10 to 15% of the basic mass of the calender roll (3, 4).

**11.** Calender roll according to Claim 10, **characterized in that** the mass changing device (22) alternately feeds air and a fluid into the supply connection arrangement (20, 21).

**12.** Calender roll according to Claim 11, **characterized in that** the mass changing device (22) displaces the fluid with the aid of the air.

**13.** Calender roll according to Claim 11 or 12, **characterized in that** the feed directions of fluid and air are opposite to each other.

**14.** Calender roll according to one of Claims 11 to 13, **characterized in that** the supply connection arrangement (20, 21) has a fluid connection (20) opposite which there is a baffle plate (26) which, apart from a gap (29) of predetermined thickness, reaches as far as the inner wall of the roll shell (16).

**15.** Calender roll according to Claim 14, **characterized in that** the supply connection arrangement (20, 21) has an air connection (21) which passes through the baffle plate (26).

**16.** Calender roll according to Claim 14 or 15, **characterized in that** ducts (28) that extend radially are arranged between the baffle plate (26) and the roll journal (18, 19).

**17.** Calender roll according to Claim 15 or 16, **characterized in that** a fluid sensor (31) is arranged in the air connection.

**18.** Calender roll according to one of Claims 14 to 17, **characterized in that** an air sensor (35) is arranged in the fluid connection (20).

**19.** Calender roll according to one of Claims 14 to 18, **characterized in that** the mass changing device (22) has a pressure sensor for the air supply.

## Revendications

**1.** Procédé de fonctionnement d'un rouleau de calandre (3, 4) qui coopère en rotation avec au moins un autre rouleau de calandre (5, 6) d'un empilement de rouleaux (10) et présente une enveloppe de rouleau (16, 16'), dans lequel au moins un rouleau de calandre (3) de l'empilement de rouleaux (10) présente un revêtement élastique (15), **caractérisé en ce que** l'on modifie la masse du rouleau de calandre (3, 4) pendant le fonctionnement par l'apport et l'enlèvement d'une masse étrangère, qui augmente la masse du rouleau de calandre (3, 4) de 10 à 15 % de sa masse de base, par le biais d'un agencement de raccord d'alimentation (20, 21).

**2.** Procédé selon la revendication 1, **caractérisé en ce que** l'on modifie en continu la masse pendant le fonctionnement.

**3.** Procédé selon la revendication 1 ou 2, **caractérisé en ce que** l'on apporte pendant le fonctionnement une quantité de liquide prédéterminée et cette quantité de liquide est ensuite évacuée à nouveau.

**4.** Procédé selon la revendication 3, **caractérisé en ce que** l'on applique le liquide (30) contre la paroi interne de l'enveloppe de rouleau (16, 16').

**5.** Procédé selon la revendication 3 ou 4, **caractérisé en ce qu'**on laisse tourner le liquide (30) avec le rouleau.

**6.** Procédé selon l'une quelconque des revendications 3 à 5, **caractérisé en ce que** l'on évacue le liquide (30) hors du rouleau par soufflage à l'aide d'air comprimé.

**7.** Procédé selon la revendication 6, **caractérisé en ce que** l'on utilise l'apparition d'air dans la conduite d'évacuation de liquide comme un signal pour un nouveau remplissage du rouleau de calandre avec du liquide (30).

**8.** Procédé selon l'une quelconque des revendications 3 à 7, **caractérisé en ce que** le liquide (30) est équilibré en température.

**9.** Procédé selon l'une quelconque des revendications 1 à 8, **caractérisé en ce que** l'on compense la modification de masse du rouleau de calandre par des rouleaux de compensation de la flexion (1, 8) et/ou par des cylindres de compensation du poids du rouleau de calandre.

**10.** Rouleau de calandre comprenant une enveloppe de rouleau (16, 16') et un agencement de raccord d'alimentation (20, 21) connecté à un espace interne (17) entouré par une enveloppe de rouleau (16, 16'), le rouleau de calandre (3, 4) pouvant fonctionner en coopération avec au moins un autre rouleau de calandre (5, 6) d'un empilement de rouleaux (10) qui présente au moins un rouleau de calandre (4) avec un revêtement élastique (15), **caractérisé en ce que** l'agencement de raccord d'alimentation (20, 21) est connecté à un dispositif de modification de masse (22) qui apporte au rouleau une masse étrangère de 10 à 15 % de la masse de base du rouleau de calandre (3, 4) et l'en évacue.

**11.** Rouleau de calandre selon la revendication 10, **caractérisé en ce que** le dispositif de modification de masse (22) injecte en alternance de l'air et un liquide dans l'agencement de raccord d'alimentation (20, 21).

**12.** Rouleau de calandre selon la revendication 11, **caractérisé en ce que** le dispositif de modification de masse (22) refoule le liquide au moyen de l'air.

**13.** Rouleau de calandre selon la revendication 11 ou 12, **caractérisé en ce que** les directions d'injection de liquide et d'air sont opposées.

**14.** Rouleau de calandre selon l'une quelconque des revendications 11 à 13, **caractérisé en ce que** l'agencement de raccord d'alimentation (20, 21) présente un raccord de liquide (20) en regard duquel se trouve une chicane (26) qui parvient jusqu'à une fente (29) d'épaisseur prédéterminée contre la paroi interne de l'enveloppe de rouleau (16).

**15.** Rouleau de calandre selon la revendication 14, **caractérisé en ce que** l'agencement de raccord d'alimentation (20, 21) présente un raccord d'air (21) qui traverse la chicane (26).

**16.** Rouleau de calandre selon la revendication 14 ou 15, **caractérisé en ce que** l'on dispose entre la chicane (26) et les tourillons de rouleau (18, 19) des canaux s'étendant radialement (28).

**17.** Rouleau de calandre selon la revendication 15 ou 16, **caractérisé en ce que** l'on dispose dans le raccord d'air un capteur de liquide (31).

**18.** Rouleau de calandre selon l'une quelconque des revendications 14 à 17, **caractérisé en ce que** l'on dispose dans le raccord de liquide (20) un capteur d'air (35).

**19.** Rouleau de calandre selon l'une quelconque des revendications 14 à 18, **caractérisé en ce que** le dispositif de modification de masse (22) présente un capteur de pression pour l'alimentation en air.

Fig.1

Fig.2

17  16  15  29

3

30  18  34  19

26  33  20  21

27
28
26

Fig.3

22

35

23

31

32

25  24

EP 1 126 080 B1

Fig.4